**Europäisches Patentamt**

**European Patent Office**

**Office européen des brevets**

(19)

(11) Veröffentlichungsnummer: **0 065 484**
**A1**

(12) # EUROPÄISCHE PATENTANMELDUNG

(21) Anmeldenummer: **82810181.6**

(51) Int. Cl.³: **G 01 J 3/50**

(22) Anmeldetag: **30.04.82**

(30) Priorität: **08.05.81 CH 2995/81**

(43) Veröffentlichungstag der Anmeldung: **24.11.82**
**Patentblatt 82/47**

(84) Benannte Vertragsstaaten: **CH DE FR GB LI NL SE**

(71) Anmelder: **GRETAG Aktiengesellschaft,**
**Althardstrasse 70, CH-8105 Regensdorf (CH)**

(72) Erfinder: **Ott, Hans, Ostring 54, CH-8105 Regensdorf**
**(CH)**

(74) Vertreter: **Pirner, Wilhelm et al, Patentabteilung der**
**CIBA-GEIGY AG Postfach, CH-4002 Basel (CH)**

(54) **Messkopf für ein Remissions-Farbmessgerät.**

(57) Das von einer Lampe (1) ausgehende Licht beaufschlagt das Messobjekt unter 90°. Das von diesem remittierte Licht wird unter 45° mittels einer Ringspiegel-Optik (3–6) gesammelt und mittels zweier farbselektiver Interferenzspiegel (7, 8) in die drei Farbanteile Blau, Rot und Grün aufgespalten. Die drei Farbanteile gelangen dann über weitere Filter (9–11) und je einen Aplanaten (12) auf je eine Siliziumplanar-Fotodiode (13). Zur Ausblendung des von der Oberfläche des Messobjekts direkt reflektierten Lichts sind zwei gekreuzte Linearpolarisatoren (141a, 142a) in den Strahlengang eingefügt. Um Schwierigkeiten mit den auf die Polarisationsrichtung der sie beaufschlagenden Lichts empfindlichen Interferenzspiegeln (7, 8) zu vermeiden, ist der im Abbildungsstrahlengang befindliche Linearpolarisator (142a) auf seiner Rückseite mit einer λ/4-Schicht (b) bedampft, welche eine Zirkularpolarisation des den Spiegeln (7, 8) zugeführten Lichts bewirkt.

GRETAG Aktiengesellschaft                    9-13387/=

Regensdorf (Schweiz)


Messkopf für ein Remissions-Farbmessgerät
_____


Die Erfindung betrifft einen Messkopf für ein Remissions-Farbmessgerät gemäss dem Oberbegriff des Patentanspruchs 1.


Bei solchen allgemein als Densitometer bezeichneten Farbmessgeräten
bzw. deren Messköpfen ist es vielfach erwünscht, die von der Farbinformation des Messobjekts unabhängige direkte Oberflächenreflexion
des Messobjekts zu unterdrücken bzw. auszublenden. Ueblicherweise
werden dazu zwei gekreuzte Linearpolarisatoren oder zwei Zirkularpolarisatoren (Kombination eines Linearpolarisators mit einer
Lambda-Viertel-Platte) verwendet, von denen der eine im Beleuchtungsstrahlengang und der andere im Abbildungs- bzw. Messstrahlengang
angeordnet ist. Im Falle von Zirkularpolarisatoren ist dabei die
Anordnung z.B. gemäss De-A-2 033 183, US-A-4 007 979 oder
US-A-3 812 374 stets so, dass die Lambda-Viertel-Platten beider Polarisatoren dem Messobjekt zugewandt sind und also der Zirkularpolarisator im Strahlengang des reflektierten Lichts gar nicht als solcher
wirkt. In beiden Fällen, also bei Verwendung von gekreuzten Linearpolarisatoren wie auch bei Zirkularpolarisatoren werden daher die dem
zweiten Polarisator folgenden optischen Elemente mit linear polarisiertem Licht beaufschlagt.


Für gewisse Anwendungen werden Densitometer bzw. Messköpfe benötigt,
die eine simultane Ausmessung des Messobjekts in zwei oder drei Farbkanälen erlauben. Ein dafür geeigneter Messkopf könnte, ähnlich wie
bei automatischen Farbkopiergeräten, mit einem Interferenzspiegel-
Strahlenteiler ausgestattet sein, der das Messlicht in die gewünschten Farbanteile zerlegt und je einem eigenen Fotoempfänger zuführt.

- 2 -

Die Spektralcharakteristiken von Interferenzspiegeln sind vom Einfallswinkel und bei nicht senkrechtem Lichteinfall auch von der Polarisationsrichtung des einfallenden Lichts abhängig. Wenn also Interferenzspiegel-Strahlenteiler in Verbindung mit den weiter oben angeführten Linear- oder Zirkularpolarisatoren für die Unterdrückung von Oberflächenreflexionen verwendet werden, muss auf die geometrische Ausrichtung der Polarisatoren sehr grosse Sorgfalt aufgewandt werden, um keine Aenderungen der Spektralcharakteristiken der einzelnen Farbkanäle zu erhalten. Ferner besteht auch die Gefahr des Auftretens von Driftproblemen, wenn einzelne optische Elemente mechanische Spannungen aufweisen, die sich bei Temperaturänderungen ändern und eine Aenderung der Polarisationsrichtung des auf die Interferenzspiegel auftreffenden Lichts bewirken.

Durch die Erfindung sollen nun diese Schwierigkeiten vermieden und insbesondere ein Messkopf der zur Rede stehenden Art derart verbessert werden, dass einerseits Oberflächenreflexionen zuverlässig unterdrückt werden und anderseits beim allfälligen Einsatz von Interferenzspiegeln keine polarisationsbedingten Schwierigkeiten auftreten. Ein weiteres Ziel der Erfindung ist die Schaffung eines Messkopfs zur gleichzeitigen Messung in zwei oder mehreren Farbkanälen.

Diese der Erfindung zugrundeliegenden Aufgaben werden erfindungsgemäss durch die in den Patentansprüchen 1 und 6 beschriebenen Merkmale gelöst.

Im folgenden wird die Erfindung anhand eines in der Zeichnung dargestellten Ausführungsbeispiels näher erläutert. Es zeigen:

Fig. 1  eine schematische Darstellung des optischen Aufbaus eines erfindungsgemässen Messkopfs mit Zirkularpolarisationsplatte und

Fig. 2 und 3 je eine Skizze zum Verständnis der Polarisationsplatte.

Der dargestellte Desitometer-Messkopf entspricht bis auf die Tatsache, dass er dreikanalig ausgelegt ist und die damit zusammenhängenden Unterschiede sowie eine noch zu erläuternde Zirkularpolarisationsplatte im wesentlichen dem z.B. in der CH-PS No. 607 021 bzw. der US-PS No. 4078858 beschriebenen Messkopf. Er umfasst eine in der optischen Achse angeordnete Lampe 1 mit einer Sammellinse 2, eine ringförmige planparallele Glasplatte 3 mit einem aufgedampften ebenen Ringspiegel 4, einen mittels eines Distanzrings 5 im Abstand von der Platte 3 angeordneten ringförmigen Glaskörper 6 mit einem aufgedampften sphärischen Ringspiegel 6', einen blau und einen rot reflektierenden Interferenzspiegel 7 und 8, ein Blaufilter 9, ein Rotfilter 10 und ein Grünfilter 11, drei aplanatische Linsen 12, drei fotoelektrische Wandler in Form von Siliziumplanardioden 13 und die schon genannte Polarisationsplatte 14.

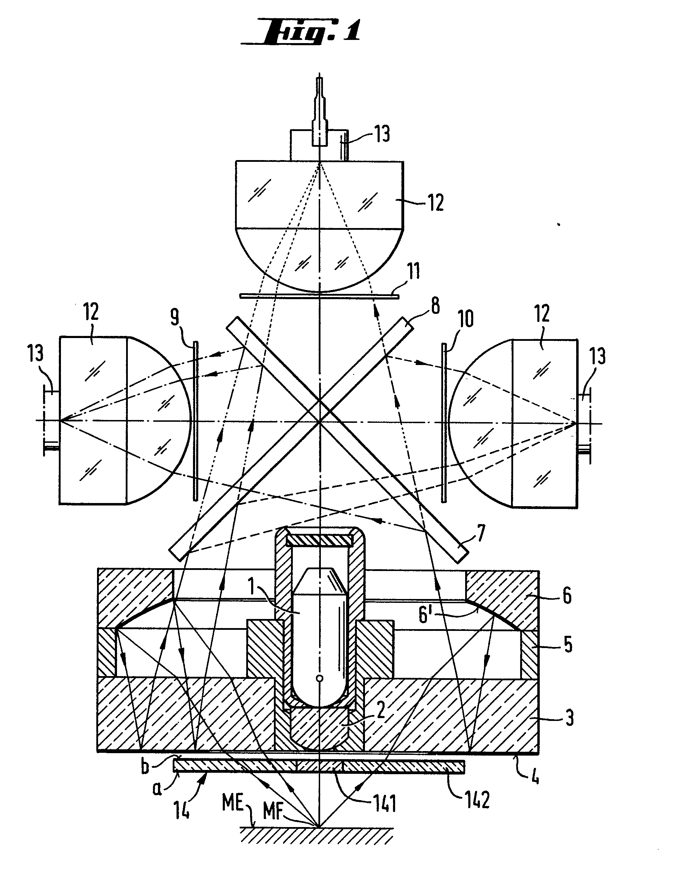

Der Strahlenverlauf ist analog wie beim Messkopf gemäss den angeführten Patentschriften. Das von der Lampe 1 ausgehende Licht durchsetzt die Polarisationsplatte 14 und fällt unter 90° auf den mit MF bezeichneten Messfleck-Bereich der Messebene ME. Das vom Messfleck unter rund 45° reflektierte Licht durchdringt ebenfalls die Polarisationsplatte 14, gelangt durch die planparallele Glasplatte 3, wird vom sphärischen Ringspiegel 6' und dann vom ebenen Ringspiegel 4 reflektiert und wird schliesslich von den beiden gekreuzten Interferenzspiegeln 7 und 8 in die drei Farbkomponenten Blau, Rot und Grün zerlegt. Die drei Farbanteile gelangen dann nach einer weiteren Filtrierung in den Filtern 9, 10 und 11 durch die Aplanaten 12 auf die jeweilige Fotodiode 13. Die unterschiedlichen Bereiche der Strahlengänge der drei Farbanteile Blau, Rot und Grün sind in der Fig. 1 durch strichpunktierte, strichlierte bzw. punktierte Linien angedeutet.

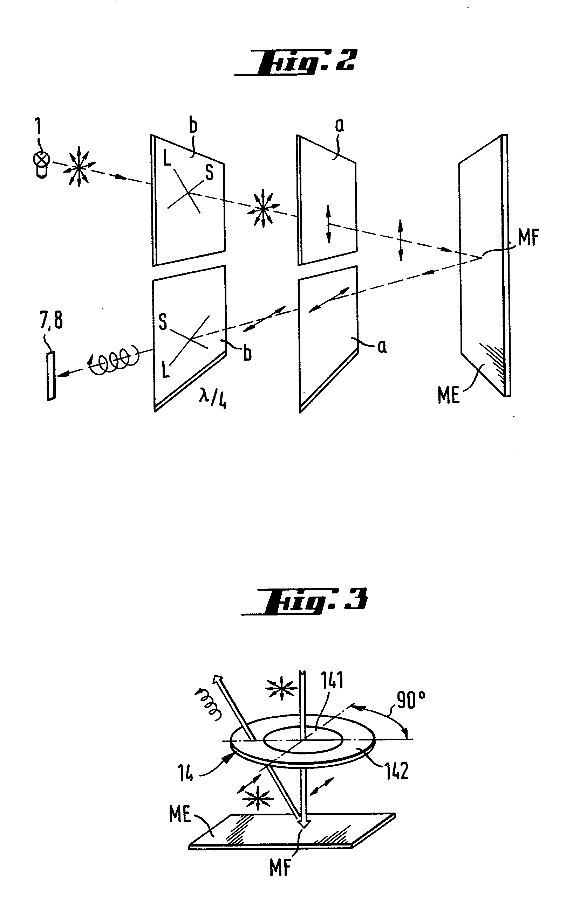

Abgesehen von der dreikanaligen Auslegung des erfindungsgemässen Messkopfs besteht einer der wesentlichsten Unterschiede zum Messkopf gemäss den erwähnten Patentschriften in der Zirkularpolarisationsplatte 14. Diese Platte 14 besteht, wie auch aus Fig. 3 deutlich wird, aus zwei zirkularpolarisierenden Scheiben,und zwar einer inneren,kreisförmigen Scheibe 141 und einer äusseren, kreisringförmigen Scheibe 142. Die innere Scheibe 141 ist gegenüber der äusseren Scheibe 142 optisch um 90° verdreht (siehe Fig. 3). Jede zirkularpolarisierende Scheibe besteht aus einer linearpolarisierenden Schicht a und einer darauf aufgedampften $\lambda/4$-Schicht b (Fig. 2).

Die Zirkularpolarisationsplatte 14 ist so angeordnet, dass ihre mit der $\lambda/4$-Schicht versehene Seite der Lichtquelle 1 zugewandt ist. Das von der Lampe 1 ausgehende Licht durchsetzt die innere, kreisförmige Polarisator-Scheibe 141, das vom Messobjekt reflektierte Licht durchdringt die äussere, ringförmige Polarisatorscheibe 142 (Fig. 3).

Die Wirkungsweise der Zirkularpolarisationsplatte ist wie folgt: Das von der Lampe 1 ausgehende unpolarisierte Licht durchsetzt zunächst die $\lambda/4$-Schicht der Scheibe 141, wobei sein Polarisationszustand unbeeinflusst bleibt, und wird dann in der linearpolarisierenden Schicht a der Scheibe 141 linear polarisiert. Das vom Messobjekt an der Oberfläche direkt reflektierte, unerwünschte Licht bleibt linear polarisiert und wird daher von der um 90° gedrehten linearpolarisierenden Schicht a der Polarisatorscheibe 142 nicht durchgelassen. Das vom Messobjekt depolarisierte Licht hingegen kann die linearpolarisierende Schicht a durchdringen und dann die $\lambda/4$-Schicht b der Polarisator-Scheibe 142 durchsetzen, wird dabei zirkularpolarisiert und gelangt so in den Messkopf und weiter über die Interferenzspiegel zu den Fotoempfängern. Aufgrund der Zirkularpolarisation des Lichts bestehen dabei keine Spektralverlaufsprobleme bei den Interferenzspiegeln.

Aus Obigem ist erkennbar, dass die $\lambda/4$-Schicht b der kreisförmigen Polarisator-Scheibe 141 eigentlich wirkungslos und damit überflüssig ist. Sie ist lediglich deswegen vorhanden, weil auf diese Weise eine einfache Herstellung der Platte 14 durch Ausstanzen der Scheibe 141

- 5 -

aus einer ebenen zirkularpolarisierenden Platte und um 90° verdrehtes Wiedereinsetzen der ausgestanzten Scheibe in dieselbe Platte
möglich ist.

Es versteht sich, dass die $\lambda/4$-Schicht b streng genommen nur für
eine ganz bestimmte Wellenlänge Zirkularpolarisation des linearpolarisierten Lichts bewirkt. Die Praxis hat jedoch gezeigt, dass, wenn $\lambda$
etwa im Grün-Bereich gewählt wird, sich auch in den angrenzenden Rot-
und Blau-Bereichen noch ein ausreichender Zirkular-Polarisationseffekt ergibt.

Um die Schwierigkeiten mit den Spektralverläufen der Interferenzspiegel zu vermeiden, würde es im Prinzip auch genügen, das vom Messobjekt reflektierte Licht nach dem Durchgang durch die als Analysator wirkende linearpolarisierende Schicht a der Ringscheibe 142
mit geeigneten Mitteln einfach zu depolarisieren. Die erfindungsmässe Zirkularpolarisierung ist jedoch eine besonders einfache und
elegante Lösung zur Umgehung der genannten Schwierigkeiten.

- 6 -

Patentansprüche

1. Messkopf für ein Remissions-Farbmessgerät mit einer Lichtquelle (1) und einer Projektionsoptik (2) zur Beleuchtung des Messobjekts, einem fotoelektrischen Wandler (13) und einer Abbildungsoptik (3-6, 12) zur Beaufschlagung des Wandlers (13) mit dem vom Messobjekt remittierten Licht sowie mit im Beleuchtungsstrahlengang und im Abbildungsstrahlengang angeordneten Polarisationsmitteln (141,142) zur Fernhaltung des von der Oberfläche des Messobjekts direkt reflektierten Lichts, dadurch gekennzeichnet, dass die Polarisationsmittel (142) im Abbildungsstrahlengang das vom Messobjekt remittierte Licht zumindest teilweise zirkularpolarisieren.

2. Messkopf nach Anspruch 1, dadurch gekennzeichnet, dass die Polarisationsmittel (142) im Abbildungsstrahlengang aus einem Linearpolarisator (a) und einer diesem in Strahlenrichtung nachgeschalteten $\lambda/4$-Platte (b) bestehen.

3. Messkopf nach Anspruch 2, dadurch gekennzeichnet, dass die Polarisationsmittel (141) im Beleuchtungsstrahlengang das das Messobjekt beaufschlagende Licht um 90° gegenüber der Linearpolarisationsrichtung im Abbildungsstrahlengang verdreht linearpolarisieren.

4. Messkopf nach Anspruch 3, dadurch gekennzeichnet, dass die Polarisationsmittel (141,142) als ebene Platte (14) ausgebildet sind, welche aus einer linearpolarisierenden Schicht (a) und einer darauf aufge-dampften $\lambda/4$-Schicht (b) besteht, und dass die Platte (14) einen zentralen inneren Teil (141) und einen diesen ringförmig umschliessenden äusseren Teil (142) umfasst, wobei die Polarisationsrichtung des inneren Teils um 90° gegenüber der des äusseren Teils versetzt ist.

5. Messkopf nach einem der Ansprüche 2 bis 4, dadurch gekennzeichnet, dass die $\lambda/4$-Platte bzw. -Schicht (b) für den grünen Spektralbereich bemessen ist.

- 7 -

6. Messkopf nach einem der vorangehenden Ansprüche, dadurch gekennzeichnet, dass er zur simultanen Erfassung der Remissionswerte in wenigstens zwei, vorzugsweise drei Farbkanälen ausgebildet ist, wobei für jeden Farbkanal ein eigener fotoelektrischer Wandler (13) und zur Aufspaltung des vom Messobjekt remittierten Lichts teildurchlässige Interferenzspiegel (7,8) vorgesehen sind.

# Fig. 1

## Fig. 2

## Fig. 3

# 0065484

Nummer der Anmeldung

**Europäisches Patentamt**

## EUROPÄISCHER RECHERCHENBERICHT

EP 82 81 0181

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A,D | US-A-4 078 858 (F.MAST) *Spalten 2-3; Figur 1* | 1 | G 01 J 3/50 |
| A,D | DE-A-2 033 183 (LICENTIA P.V.) *Seite 6, Figur 1* | 1 | |
| A,D | US-A-4 007 979 (D.COBLITZ) *Spalten 3-4; Figuren 1-2* | 1 | |
| A,D | US-A-3 812 374 (R.TUHRO) *Spalten 3-4; Figur 3* | 1 | |
| A | DE-A-1 902 101 (FA.ERWIN SICK) *Spalte 3; Figur 1* | 1 | |
| A | PHILIPS TECHNISCH TIJDSCHRIFT, Band 24, Nr. 9, Januar 1963, Seiten 261-269, Eindhoven (NL) H.DE LANG et al.: "De Kleurscheiding in Kleurentelevisiecamera's". *Seite 262, Seite 265; Figuren 1-2* | 6 | RECHERCHIERTE SACHGEBIETE (Int. Cl. 3) G 01 J 3/50 G 01 J 3/46 G 01 N 21/55 G 02 B 27/28 |

Der vorliegende Recherchenbericht wurde für alle Patentansprüche erstellt.

| Recherchenort | Abschlußdatum der Recherche | Prüfer |
|---|---|---|
| DEN HAAG | 19-08-1982 | BOEHM CH.E.D. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503. 03.82